# EUROPEAN PATENT SPECIFICATION

(11) **EP 1 249 757 B1**
(45) Date of publication and mention of the grant of the patent: **19.08.2009**
(21) Application number: 01400929.4
(22) Date of filing: 11.04.2001
(51) Int. Cl.: G06F 9/46

(54) **Interrupt throttling for inter-processor communications**
Unterbrechungsregelung für Interprozesskommunikation
Réglage d'interruptions pour communication entre processus

(43) Date of publication of application: 16.10.2002
(73) Proprietor: Texas Instruments Incorporated, Dallas, Texas 75251 (US)
(72) Inventor: Gardner, Andrew James, Santa Barbara, CA 93109 (US)
(74) Representative: Holt, Michael

(56) References cited:
- EP-A- 0 551 242
- US-A- 5 123 094
- US-A- 5 835 779
- US-A- 6 029 191

## Description

### FIELD OF THE INVENTION

The present invention relates generally to data processing systems and, more particularly, to communications between data processors in a data processing system.

### BACKGROUND OF THE INVENTION

In conventional data processing systems including a plurality of data processors which communicate with one another, such communication is often controlled by an interrupt mechanism. For example, if a first data processor wishes to communicate with a second data processor, the first data processor applies to the second data processor an interrupt signal which interrupts the second data processor. Conversely, if the second data processor wishes to communicate with the first data processor, then the second data processor applies to the first data processor an interrupt signal which interrupts the second data processor. Each of the data processors typically includes an interrupt service routine which then handles the requested communication.

Execution of the interrupt service routines disadvantageously adds overhead processing to the processing loads of the data processors. In addition, servicing an interrupt can be particularly disadvantageous if the interrupted data processor has a pipelined data processing architecture.

It is therefore desirable to reduce the amount of interrupt activity involved in controlling communications between data processors.

US 5,123,094 (MacDougall) discloses a method for communicating between processors in a multiprocessor system. Messages are exchanged through a shared memory organised into pages, each of which may be "owned" by a processor. When a sending processor executes a store instruction that stores its operand to a memory area owned by a destination processor, a message interrupt is presented to the destination processor. If the destination processor is enabled for interrupts, the operand of the store instruction is stored at the address specified by the store instruction and that address is stored in a register of the destination processor. Execution of the store instruction by the sending processor then completes. If, on the other hand, the destination processor is disabled for interrupts, the store instruction is either rejected or queued.

Further, US 5,123,094 discloses a CPU with multiple processing units; when the CPU receives an interrupt signal, it examines the status of its processing units, and if one of the units is halted it is assigned to process the interrupt signal. Only if all processing units are busy is it necessary to interrupt processing unit execution. Each processing unit has a flag indicating if its state must be saved prior to interrupting; by setting this flag prior to halting a unit can avoid state saving overhead.

Accordingly the present invention, as defined in the appended independent claims 1, 13, and 29, provides, a first data processor that will interrupt a second data processor for communication therewith only if the first data processor determines that I/O is blocked on the second data processor. By using the indication of whether or not I/O is blocked on the second data processor, the first data processor can advantageously avoid interrupting the second data processor unnecessarily.

### BRIEF DESCRIPTION OF THE DRAWINGS

The present invention will now be further described, by way of example, with reference to the preferred and exemplary embodiments illustrated in the figures of the accompanying drawings in which:
FIGURE 1 diagrammatically illustrates an exemplary embodiment of a data processing system according to the invention;
FIGURE 2 is similar to FIGURE 1, and includes a conceptual illustration of a data communication channel between the data processors of FIGURE 1;
FIGURE 3 illustrates in more detail the use and control of the shared memory of FIGURE 1 according to the invention; and
FIGURE 4 illustrates exemplary operations which can be performed by the embodiments of FIGURES 1-3.

### DETAILED DESCRIPTION

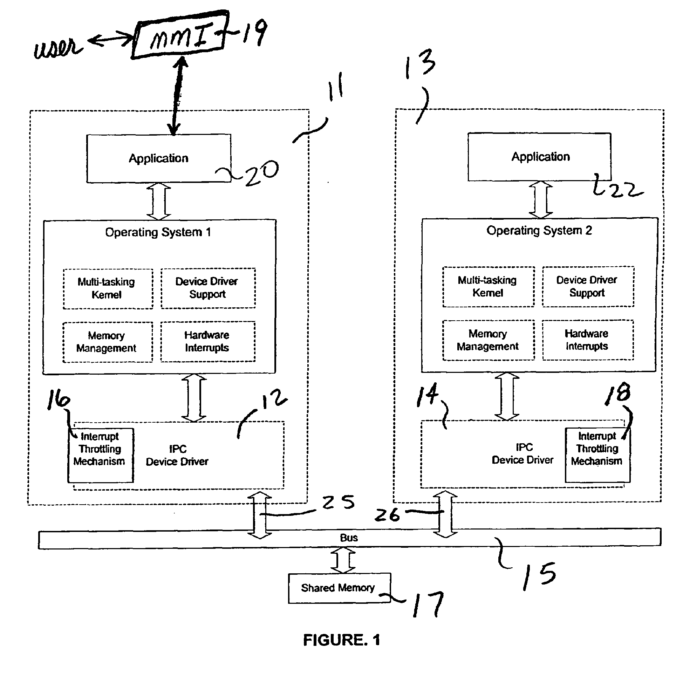

FIGURE 1 diagrammatically illustrates exemplary embodiments of a data processing system according to the invention. The exemplary system of FIGURE 1 includes first and second data processors 11 and 13 coupled for communication with one another via respective communication ports 25 and 26, a bus 15 and a shared memory resource 17. In one exemplary embodiment, the data processor 11 can be a general purpose microprocessor (e.g. x86 or ARM) , and the data processor 13 can be a special purpose data processor such as a digital signal processor (DSP). The data processors in FIGURE 1 utilize respective multi-tasking operating systems that are capable of inter-processor signaling, such as generation and handling of inter-processor hardware interrupts. Access to the shared memory 17 can be arbitrated sufficiently to provide each processor with exclusive access to the shared memory, as described in further detail below.

As shown in FIGURE 1, the operating systems of the respective data processors 11 and 13 each include a multi-tasking kernel, memory management, hardware interrupts and device driver support. Each processor also includes an inter-processor communication (IPC) device driver. The IPC device driver 12 of the data processor 11 implements an interrupt throttling mechanism 16, and the IPC device driver 14 of the data processor 13 implements an interrupt throttling mechanism 18. The IPC device driver of each data processor uses its associated interrupt throttling mechanism to limit, or throttle, generation of IPC-related interrupts to the other data processor. By operation of the interrupt throttling mechanisms, the data processing overhead incurred by the IPC device drivers for handling incoming interrupts is reduced.

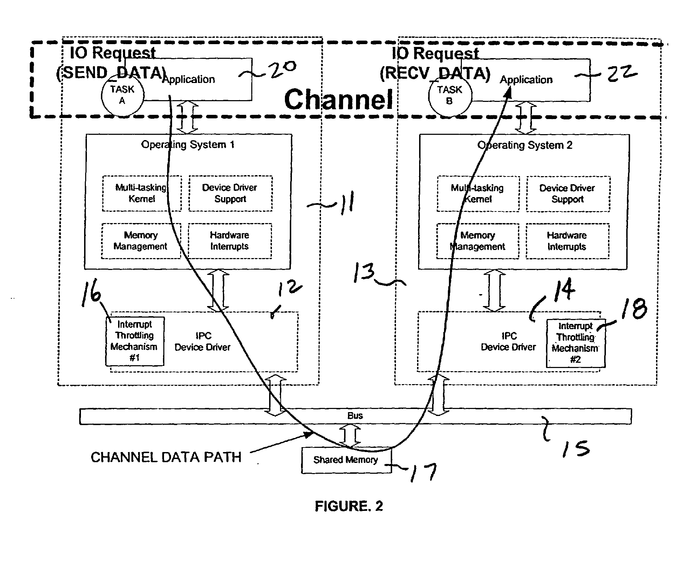

FIGURE 1 further illustrates an application running on each of the data processors. These applications 20 and 22 communicate with one another via a communication channel data path as illustrated in FIGURE 2. The communication channel between the applications is illustrated conceptually within the broken lines of FIGURE 2. The actual physical data path passes through the shared memory 17 as illustrated. Referring again to the example of FIGURE 1, a man/machine interface (MMI) 19 is coupled to the data processor 11 for permitting a user to communicate with the application currently running on the data processor 11. As shown in FIGURE 2, a task A is associated with the application 20 on data processor 11, and a task B is associated with the application 22 on data processor 13. A task is a thread of execution that can be in various states in accordance with the associated data processor's operating system. The operating system kernel of each data processor has the ability to block, i.e. suspend, thread execution in the IPC device driver of that data processor. Also, the IPC device driver of each data processor has the ability to be signaled or interrupted by the other data processor, and each IPC device driver has access to the shared memory 17.

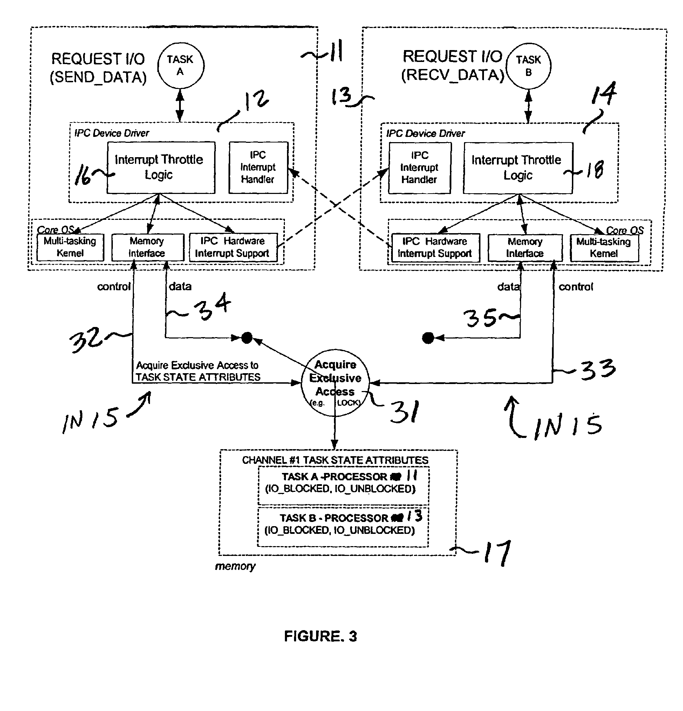

FIGURE 3 diagrammatically illustrates exemplary interfaces between the shared memory 17 and data processors 11 and 13. As shown in FIGURE 3, each of the data processors 11 and 13 can acquire exclusive access to task state attributes stored in the shared memory 17. In the example of FIGURE 3, such exclusive access is accomplished by appropriately controlling a memory access apparatus 31, illustrated in FIGURE 3 as a data switch 31. For example, if the data processor 11 wishes to obtain exclusive access to the task state attributes stored in memory 17, the data processor 11 provides, via its memory interface, control signaling at 32 to cause the data switch 31 to assume the position illustrated in FIGURE 3. With the data switch in this configuration, the data processor 11 can access the shared memory 17 via the data path 34, and the data processor 13 is prevented from accessing the shared memory 17. Similarly, when the data processor 13 wishes to acquire exclusive access to the task state attributes in the shared memory 17, the memory interface of data processor 13 outputs appropriate control signaling at 33 to cause the data switch 31 to disconnect the data path 34 from the shared memory 17 and connect the data path 35 to the shared memory 17.

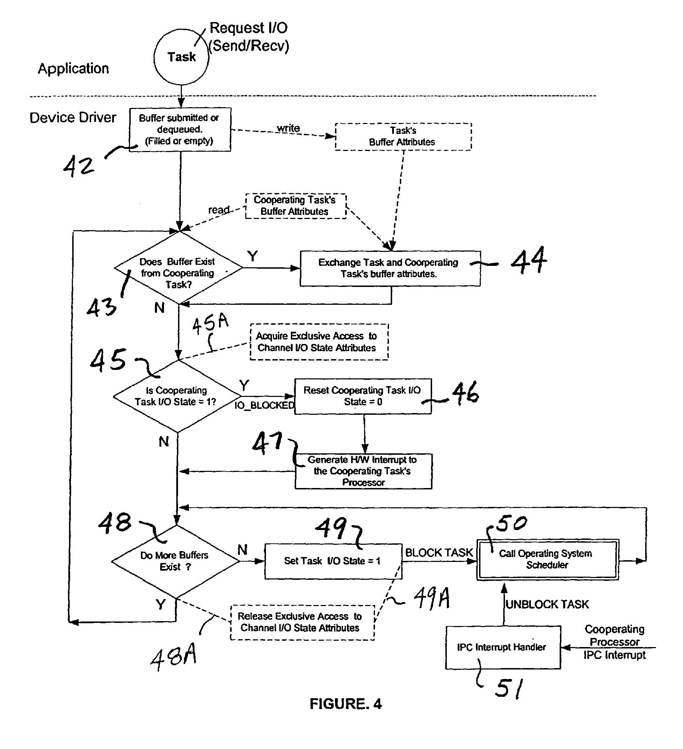

As illustrated in FIGURE 3, the shared memory 17 includes task I/O state attributes corresponding to task A on processor 11 and task B on processor 13. The task I/O state attribute of a given task does not necessarily represent the actual instantaneous operating system state of the task, but does indicate at least that the task is immediately going to block on, for example channel #1, or is immediately going to be unblocked with respect to channel #1 by an IPC interrupt. (This will become apparent from the description of FIGURE 4 hereinbelow.) The IPC device driver of each data processor can access the channel I/O attributes. Each IPC device driver includes interrupt throttle logic to implement its interrupt throttling mechanism.

Also shown in FIGURE 3 are IPC interrupt handlers in the IPC device drivers 12 and 14, and IPC hardware interrupt support portions in the operating systems of the data processors 11 and 13. Each data processor can thus interrupt and be interrupted by the other data processor, as described in more detail below.

FIGURE 4 illustrates exemplary operations which can be performed by either of the data processors 11 and 13 of FIGURES 1-3 when one of tasks A and B (see also FIGURES 2 and 3) wishes to communicate with the other of tasks A and B. A given application task will request I/O to send data to or receive data from a cooperating task on the other (cooperating) data processor. At 42, buffers are either passed into the device driver or removed from a device queue. If it is determined at 43 that buffer attributes from the cooperating task on the other data processor exist in the shared memory 17, buffer data and attributes can be exchanged at 44 in order to execute a data exchange. This can be accomplished, for example, by swapping buffer data and attributes, or by copying buffer data and attributes, both of which are well known conventional procedures for implementing inter-processor communications through a shared memory resource.

After having acquired exclusive access to the task I/O state attributes in the shared memory 17 (see 45A), the task I/O state of the other data processor is determined at 45. If the task I/O state attribute in the shared memory indicates that the cooperating data processor is blocked, then the task I/O state attribute for the cooperating task is set to 0 (unblocked) in shared memory at 46, after which a hardware interrupt to the cooperating data processor is generated at 47. If the task I/O state attribute at 45 indicates that the cooperating task is not blocked, or after generating the hardware interrupt at 47, it is determined at 48 whether more buffers exist. If so, then operations return to block 43. When it is determined at 48 that no more buffers exist (buffer exchange can continue until either processor is out of data buffers), the data processor sets its own task I/O state attribute to a value of 1 (blocked) at 49, thereby indicating that its task is blocked. Thereafter at 50, the operating system scheduler of the multi-tasking kernel is called to block the task. Note also that the data processor releases its exclusive shared memory access either after setting its own task I/O state to a value of 1 at 49 (see 49A) or after determining that more buffers exist at 48 (see 48A).

FIGURE 4 also indicates how the device driver responds to an IPC interrupt received from the cooperating processor. As illustrated in FIGURE 4, the IPC interrupt handler in the IPC device driver receives the IPC interrupt at 51, after which the operating system scheduler is called at 50 to unblock the task in response to the IPC interrupt. Operations proceed to block 48 after the scheduler blocks or unblocks the task at 50.

As illustrated in FIGURES 1-4, if a task running on the data processor 11, for example, wishes to communicate with a cooperating task running on the data processor 13, the data processor 11 will generate a hardware interrupt to the data processor 13 only if the data processor 11 determines that the I/O state of the cooperating task on data processor 13 is (or is about to be) blocked. In this manner, the data processor 13 is interrupted only when necessary, i.e. only when the cooperating task is blocked. This avoids unnecessary interruption of the data processor 13, thereby advantageously reducing the interrupt handling overhead on data processor 13.

Although the exemplary embodiments of FIGURES 1-3 illustrate only two data processors, it will be apparent to workers in the art that the interrupt throttling mechanism according to the invention is applicable to communications between any two data processors. Accordingly, the interrupt throttling mechanism of, for example, data processor 11 can be utilized in conjunction with communications between data processor 11 and other data processors (not explicitly shown) which can also gain exclusive access to the shared memory 17. In some exemplary embodiments of the invention, all components (except MMI 19) of FIGURES 1-3 can be embedded together in a single integrated circuit and, in other embodiments, one or more of these components can be provided on an integrated circuit separately from the remaining components.

Referring again to FIGURE 1, the man/machine interface (MMI) 19 permits a user to communicate with the application 20. Examples of the man/machine interface 19 include a keyboard/keypad, a visual display, etc. Examples of the system of FIGURES 1-3 include a cellular telephone, a laptop computer and a set-top box.

It will also be evident to workers in the art that the systems of FIGURES 1-3 could also be implemented with the interrupt throttling mechanism provided on only one of the data processors. For example, it is possible to throttle interrupts to only one of the data processors, such as the data processor 13. This could be advantageous, for example, if the system hardware limits the ability to provide exclusive access to the shared memory. If an exclusive access mechanism such as shown at 31 in FIGURE 3 is not available, then the data processor 11 could use, for example, a read-modify-write (RMW) bus cycle to atomically "test-and-set" the respective I/O state attributes of the two tasks.

Although exemplary embodiments of the invention are described above in detail, this does not limit the scope of the invention, which can be practiced in a variety of embodiments.

## Claims

1. A method for implementing communication between data processors, comprising:
a first task running on a first data processor (11) determining that communication is desired between the first task (20) and a second task (22) running on a second data processor (13) ;
**characterised by**:
the first data processor (11) determining whether the second task (22) is blocked with respect to communication on a predetermined communication channel (15);
if the second task (22) is blocked with respect to communication on the predetermined communication channel (15), the first data processor (11) interrupting the second data processor (13) to inform the second data processor (13) of the desired communication and thereafter participating in the desired communication on the predetermined communication channel (15); and
if the second task (22) is not blocked with respect to communication on the predetermined communication channel (15), the first data processor (11) participating in the desired communication on the predetermined communication channel (15) without interrupting the second data processor (13).

2. The method of Claim 1, further comprising;
if the second task (22) is blocked with respect to communication on the predetermined communication channel (15), the first data processor (11) providing in a memory (17) shared by the first (11) and second (13) data processors an indication that the second data processor (13) is not blocked with respect to communication on the predetermined communication channel (15).

3. The method of Claim 1 or Claim 2, wherein said determining step comprises the first data processor (11) accessing a memory (17) that is shared by the first (11) and second (13) data processors.

4. The method of Claim 3, wherein said determining step comprises the first data processor (11) obtaining exclusive access to the shared memory (17).

5. The method of Claim 4, wherein said determining step comprises the first data processor (11) retrieving from the shared memory (17) information indicative of whether the second task (22) is blocked with respect to communication on the predetermined communication channel (15).

6. The method of any preceding Claim, wherein said participating step comprises the first task (20) exchanging data buffer attributes with the second task (22).

7. The method of Claim 6, wherein said participating step comprises the first task (20) swapping buffer data and buffer attributes with the second task (22).

8. The method of Claim 6, wherein said participating step comprises the first task (20) copying from data buffers data provided by the second task (22), and the first task (20) copying attributes associated with said data buffers.

9. The method of any preceding Claim, further comprising: after said participating step, the first data processor (11) blocking the first task (20) with respect to communication on said predetermined communication channel (15) and providing in a memory (17) shared by the first (11) and second (13) data processors an indication that the first task (20) is blocked with respect to communication on the predetermined communication channel (15).

10. The method of Claim 9, further comprising:
the second data processor (13) interrupting the first data processor (11) to indicate that communication is desired between the second task (22) and the first task (20), and the first data processor (11) unblocking the first task (20) for communication on the predetermined communication channel (15) in response to said interrupting step.

11. The method of Claim 10, further comprising:
the second data processor (13), in conjunction with said interrupting step, providing in a memory (17) shared by the first (11) and second (13) data processors an indication that the first data processor (11) is not blocked with respect to communication on the predetermined communication channel (15).

12. The method of any of Claims 2 to 11, further comprising:
the second data processor (13) unblocking the second task (22) with respect to communication on the predetermined communication channel (15) in response to said interrupting step.

13. A data processing system, comprising:
a second data processor (13) coupled to a first data processor (11) for permitting communication therebetween;
said first data processor (11) including a device driver (12) for implementing a desired communication between a first task (20) running on said first data processor (11) and a second task (22) running on said second data processor (13);
a communication port coupled to said device driver for permitting said device driver (12) to access a communication channel (15) for the desired communication;
**characterised by**:
said communication port further for permitting said device driver (12) to receive information indicative of whether the second task (22) is blocked with respect to communication on said communication channel (15); and
said device driver (12) including logic responsive to a blocked indication for outputting to said second data processor (13) via said communication port an interrupt signal to inform said second data processor (13) of the desired communication, said logic responsive to an indication that the second task (22) is not blocked for permitting said device driver (12) to participate in the desired communication on said communication channel (15) without outputting said interrupt signal to said second data processor (13).

14. The system of Claim 13, wherein said communication channel (15) includes a memory apparatus (17) shared by said first (11) and second (13) data processors.

15. The system of Claim 14, wherein said shared memory apparatus (17) includes said information indicative of whether said second task (22) is blocked, said communication port of said first data processor (11) coupled to said shared memory apparatus (17) for permitting said device driver (12) of said first data processor (11) to access said information indicative of whether said second task (22) is blocked.

16. The system of Claim 15, including a memory access apparatus coupled between said shared memory apparatus and said first (11) and second (13) data processors, said memory access apparatus responsive to signaling from said first data processor (11) for permitting said device driver (12) of said first data processor (11) to access said shared memory (17) while simultaneously excluding said second data processor (13) from accessing said shared memory (17).

17. The system of Claim 13, wherein said first data processor (11) includes a scheduler for selectively blocking and unblocking said first task (20) with respect to communication on said communication channel (15), said device driver (12) coupled to said scheduler and operable after performing the desired communication for signaling said scheduler to block said first task (20) with respect to communication on said communication channel (15), and wherein said communication channel (15) includes a memory apparatus (17) shared by said first (11) and second (13) data processors, said device driver (12) further operable after performing the desired communication for storing in said shared memory apparatus (17)'an indication that said first task (20) is blocked with respect to communication on said communication channel (15).

18. The system of Claim 17, wherein said communication port of said first data processor (11) is coupled to said second data processor (13) an interrupt signal which receives from said first data processor said device driver (12) of said first data processor (11) responsive to said interrupt signal for signaling said scheduler to unblock said first task (20).

19. The system of Claim 13, including a memory apparatus (17) coupled to said first (11) and second (13) data processors, said device driver (12) of said first data processor (11) responsive to said blocked indication for providing within said memory apparatus (17) an indication that said second task (22) is not blocked with respect to communication on said communication channel (15).

20. The system of Claim 19, wherein said second data processor (13) is coupled to said communication port of said first data processor (11) for providing an interrupt signal to said device driver (12), said second data processor (13) operable in conjunction with providing said interrupt signal to said device driver (12) for also providing in said memory apparatus (17) an indication that said first task (20) is not blocked with respect to communication on said communication channel (15).

21. The system of Claim 20, wherein said first data processor (11) includes a scheduler for selectively blocking and unblocking said first task (20) with respect to communication on said communication channel (15), said device driver (12) coupled to said scheduler and responsive to said interrupt signal for signaling said scheduler to unblock said first task (20) with respect to communication on said communication channel (15).

22. The system of Claim 21, including a memory access apparatus coupled to said memory apparatus (17) and said first (11) and second (13) data processors, said memory access apparatus responsive to signaling from said first data processor (11) for permitting said first data processor (11) to access said memory apparatus while simultaneously preventing said second data processor (13) from accessing said memory apparatus (17), and said memory access apparatus responsive to signaling from said second data processor (13) for permitting said second data processor (13) to access said memory apparatus (17) while simultaneously preventing said first data processor (11) from accessing said memory apparatus (17).

23. The system of Claim 22, wherein said memory access apparatus includes a data switch.

24. The system of Claim 22, provided on a single integrated circuit chip.

25. The system of Claim 24, including a man/machine interface (19) coupled to said first data processor (11) for permitting communication between said first data processor (11) and a user.

26. The system of Claim 13, provided on a single integrated circuit chip.

27. The system of Claim 13, including a man/machine interface (19) coupled to said first data processor (11) for permitting communication between said first data processor (11) and a user.

28. The system of Claim 13, wherein said first data processor is a microprocessor and said second data processor is a digital signal processor.

29. A data processing apparatus, comprising:
a device driver (12) for implementing a desired communication between a task (20) running on the data processing apparatus (11) and a further task (22) running on a further data processing apparatus (13);
a communication port coupled to said device driver (12) for permitting said device driver (12) to access a communication channel (15) on which the desired communication can occur;
**characterised by**:
said communication port (15) further for permitting said device driver (12) to receive information indicative of whether the further task (22) is blocked with respect to communication on said communication channel (15); and
said device driver (12) including logic responsive to a blocked indication for outputting to the further data processing apparatus (13) an interrupt signal to inform the further data processing apparatus (13) of the desired communication, said logic responsive to an indication that the further task (22) is not blocked for permitting said device driver (12) to participate in the desired communication on said communication channel (15) without outputting said interrupt signal to the further data processing apparatus (13).

30. The apparatus of Claim 29, including a scheduler for selectively blocking and unblocking said first-mentioned task (20) with respect to communication on said communication channel (15), said device driver (12) coupled to said scheduler and operable after performing the desired communication for signaling said scheduler to block said first-mentioned task (20) with respect to communication on said communication channel (15).

31. The apparatus of Claim 29, wherein said communication port is further for receiving an interrupt signal from the further data processing apparatus (13), said device driver (12) responsive to said interrupt signal for signaling said scheduler to unblock said first-mentioned task (20) with respect to communication on said communication channel (15).

## Patentansprüche

1. Verfahren zur Durchführung der Kommunikation zwischen Datenprozessoren, das folgendes umfasst:
einen ersten Task, der auf einem ersten Datenprozessor (11) läuft, der feststellt, dass zwischen dem ersten Task (20) und einem zweiten Task (22), der auf einem zweiten Datenprozessor (13) läuft, eine Kommunikation gewünscht ist,
**dadurch gekennzeichnet, dass**
der erste Datenprozessor (11) feststellt, ob der zweite Task (22) bezüglich der Kommunikation auf einem vorbestimmten Kommunikationskanal (15) blockiert ist,
wenn der zweite Task (22) bezüglich der Kommunikation auf dem vorbestimmten Kommunikationskanal (15) blockiert ist, der erste Datenprozessor (11) den zweiten Datenprozessor (13) unterbricht, um den zweiten Datenprozessor (13) über die gewünschte Kommunikation zu informieren, und danach an der gewünschten Kommunikation auf dem vorbestimmten Kommunikationskanal (15) teilnimmt, und
wenn der zweite Task (22) bezüglich der Kommunikation auf dem vorbestimmten Kommunikationskanal (15) nicht blockiert ist, der erste Datenprozessor (11) an der gewünschten Kommunikation auf dem vorbestimmten Kommunikationskanal (15) teilnimmt, ohne den zweiten Datenprozessor (13) zu unterbrechen.

2. Verfahren nach Anspruch 1, das ferner folgendes umfasst:
wenn der zweite Task (22) bezüglich der Kommunikation auf dem vorbestimmten Kommunikationskanal (15) blockiert ist, liefert der erste Datenprozessor (11) in einem vom ersten (11) und vom zweiten (13) Datenprozessor gemeinsam genutzten Speicher (17) eine Angabe, dass der zweite Datenprozessor (13) bezüglich der Kommunikation auf dem vorbestimmten Kommunikationskanal (15) nicht blockiert ist.

3. Verfahren nach Anspruch 1 oder Anspruch 2, bei dem der erste Datenprozessor (11) bei dem Schritt des Feststellens auf einen Speicher (17) zugreift, der vom ersten (11) und vom zweiten (13) Datenprozessor gemeinsam genutzt wird.

4. Verfahren nach Anspruch 3, bei dem der erste Datenprozessor (11) bei dem Schritt des Feststellens einen exklusiven Zugriff auf den gemeinsamen Speicher (17) erhält.

5. Verfahren nach Anspruch 4, bei dem der erste Datenprozessor (11) bei dem Schritt des Feststellens Informationen aus dem gemeinsamen Speicher (17) abruft, die angeben, ob der zweite Task (22) bezüglich der Kommunikation auf dem vorbestimmten Kommunikationskanal (15) blockiert ist.

6. Verfahren nach einem vorhergehenden Anspruch, bei dem der erste Task (20) bei dem Schritt des Teilnehmens Datenpufferattribute mit dem zweiten Task (22) austauscht.

7. Verfahren nach Anspruch 6, bei dem der erste Task (20) bei dem Schritt des Teilnehmens Pufferdaten und Pufferattribute mit dem zweiten Task (22) tauscht.

8. Verfahren nach Anspruch 6, bei dem bei dem Schritt des Teilnehmens der erste Task (20) vom zweiten Task (22) bereitgestellte Daten aus Datenpuffern kopiert und der erste Task (20) zu den Datenpuffern gehörige Attribute kopiert.

9. Verfahren nach einem vorhergehenden Anspruch, das ferner folgendes umfasst: nach dem Schritt des Teilnehmens blockiert der erste Datenprozessor (11) den ersten Task (20) bezüglich der Kommunikation auf dem vorbestimmten Kommunikationskanal (15) und liefert in einem vom ersten (11) und vom zweiten (13) Datenprozessor gemeinsam genutzten Speicher (17) eine Angabe, dass der erste Task (20) bezüglich der Kommunikation auf dem vorbestimmten Kommunikationskanal (15) blockiert ist.

10. Verfahren nach Anspruch 9, das ferner folgendes umfasst:
der zweite Datenprozessor (13) unterbricht den ersten Datenprozessor (11), um anzuzeigen, dass zwischen dem zweiten Task (22) und dem ersten Task (20) eine Kommunikation gewünscht ist, und als Reaktion auf den Unterbrechungsschritt entblockiert der erste Datenprozessor (11) den ersten Task (20) zur Kommunikation auf dem vorbestimmten Kommunikationskanal (15).

11. Verfahren nach Anspruch 10, das ferner folgendes umfasst:
der zweite Datenprozessor (13) liefert in Verbindung mit dem Unterbrechungsschritt in einem vom ersten (11) und vom zweiten (13) Datenprozessor gemeinsam genutzten Speicher (17) eine Angabe, dass der erste Datenprozessor (11) bezüglich der Kommunikation auf dem vorbestimmten Kommunikationskanal (15) nicht blockiert ist.

12. Verfahren nach einem der Ansprüche 2 bis 11, das ferner folgendes umfasst:
als Reaktion auf den Unterbrechungsschritt entblockiert der zweite Datenprozessor (13) den zweiten Task (22) bezüglich der Kommunikation auf dem vorbestimmten Kommunikationskanal (15).

13. Datenverarbeitungssystem mit:
einem zweiten Datenprozessor (13), der mit einem ersten Datenprozessor (11) verbunden ist, um eine Kommunikation zwischen diesen zu ermöglichen,
wobei der erste Datenprozessor (11) einen Gerätetreiber (12) zur Durchführung einer gewünschten Kommunikation zwischen einem ersten Task (20), der auf dem ersten Datenprozessor (11) läuft, und einem zweiten Task (22), der auf dem zweiten Datenprozessor (13) läuft, aufweist,
einem Kommunikationsanschluss, der mit dem Gerätetreiber verbunden ist, um dem Gerätetreiber (12) für die gewünschte Kommunikation einen Zugang zu einem Kommunikationskanal (15) zu ermöglichen,
**dadurch gekennzeichnet, dass**
der Kommunikationsanschluss ferner dem Gerätetreiber (12) ermöglicht, Informationen zu empfangen, die angeben, ob der zweite Task (22) bezüglich der Kommunikation auf dem Kommunikationskanal (15) blockiert ist, und
der Gerätetreiber (12) eine Logik aufweist, die auf eine Blockiert-Angabe anspricht, um über den Kommunikationsanschluss ein Unterbrechungssignal an den zweiten Datenprozessor (13) auszugeben, um den zweiten Datenprozessor (13) über die gewünschte Kommunikation zu informieren, wobei die Logik auf eine Angabe anspricht, dass der zweite Task (22) nicht blockiert ist, damit dem Gerätetreiber (12) ermöglicht wird, an der gewünschten Kommunikation auf dem Kommunikationskanal (15) teilzunehmen, ohne das Unterbrechungssignal an den zweiten Datenprozessor (13) auszugeben.

14. System nach Anspruch 13, bei dem der Kommunikationskanal (15) eine vom ersten (11) und vom zweiten (13) Datenprozessor gemeinsam genutzte Speichervorrichtung (17) aufweist.

15. System nach Anspruch 14, bei dem die gemeinsame Speichervorrichtung (17) die Informationen enthält, die angeben, ob der zweite Task (22) blockiert ist, wobei der Kommunikationsanschluss des ersten Datenprozessors (11) mit der gemeinsamen Speichervorrichtung (17) verbunden ist, um dem Gerätetreiber (12) des ersten Datenprozessors (11) Zugriff auf die Informationen zu ermöglichen, die angeben, ob der zweite Task (22) blockiert ist.

16. System nach Anspruch 15, das eine Speicherzugriffsvorrichtung aufweist, die zwischen die gemeinsame Speichervorrichtung und den ersten (11) und den zweiten (13) Datenprozessor gekoppelt ist, wobei die Speicherzugriffsvorrichtung auf eine Signalgebung vom ersten Datenprozessor (11) anspricht, um dem Gerätetreiber (12) des ersten Datenprozessors (11) Zugriff auf den gemeinsamen Speicher (17) zu ermöglichen, während sie gleichzeitig den zweiten Datenprozessor (13) vom Zugriff auf den gemeinsamen Speicher (17) ausschließt.

17. System nach Anspruch 13, bei dem der erste Datenprozessor (11) einen Scheduler zum wahlweisen Blockieren und Entblockieren des ersten Tasks (20) bezüglich der Kommunikation auf dem Kommunikationskanal (15) aufweist, wobei der Gerätetreiber (12) mit dem Scheduler verbunden ist und nach Ausführung der gewünschten Kommunikation so betrieben werden kann, dass er den Scheduler so ansteuert, dass er den ersten Task (20) bezüglich der Kommunikation auf dem Kommunikationskanal (15) blockiert, und bei der der Kommunikationskanal (15) eine vom ersten (11) und vom zweiten (13) Datenprozessor gemeinsam genutzte Speichervorrichtung (17) aufweist, wobei der Gerätetreiber (12) ferner nach Ausführung der gewünschten Kommunikation betrieben werden kann, um in der gemeinsamen Speichervorrichtung (17) eine Angabe zu speichern, dass der erste Task (20) bezüglich der Kommunikation auf dem Kommunikationskanal (15) blockiert ist.

18. System nach Anspruch 17, bei dem der Kommunikationsanschluss des ersten Datenprozessors (11) mit dem zweiten Datenprozessor (13) verbunden ist, der vom ersten Datenprozessor ein Unterbrechungssignal empfängt, wobei der Gerätetreiber (12) des ersten Datenprozessors (11) auf das Unterbrechungssignal anspricht, um den Scheduler so anzusteuern, dass er den ersten Task (20) entblockiert.

19. System nach Anspruch 13, das eine Speichervorrichtung (17) aufweist, die mit dem ersten (11) und dem zweiten (13) Datenprozessor verbunden ist, wobei der Gerätetreiber (12) des ersten Datenprozessors (11) auf die Blockiert-Angabe anspricht, um in der Speichervorrichtung (17) eine Angabe zu liefern, dass der zweite Task (22) bezüglich der Kommunikation auf dem Kommunikationskanal (15) nicht blockiert ist.

20. System nach Anspruch 19, bei dem der zweite Datenprozessor (13) mit dem Kommunikationsanschluss des ersten Datenprozessors (11) verbunden ist, um ein Unterbrechungssignal an den Gerätetreiber (12) zu liefern, wobei der zweite Datenprozessor (13) in Verbindung mit dem Liefern des Unterbrechungssignals an den Gerätetreiber (12) so betrieben werden kann, dass er ferner in der Speichervorrichtung (17) eine Angabe liefert, dass der erste Task (20) bezüglich der Kommunikation auf dem Kommunikationskanal (15) nicht blockiert ist.

21. System nach Anspruch 20, bei dem der erste Datenprozessor (11) einen Scheduler zum wahlweisen Blockieren und Entblockieren des ersten Tasks (20) bezüglich der Kommunikation auf dem Kommunikationskanal (15) aufweist, wobei der Gerätetreiber (12) mit dem Scheduler verbunden ist und auf das Unterbrechungssignal anspricht, um den Scheduler so anzusteuern, dass er den ersten Task (20) bezüglich der Kommunikation auf dem Kommunikationskanal (15) entblockiert.

22. System nach Anspruch 21, das eine Speicherzugriffsvorrichtung aufweist, die mit der Speichervorrichtung (17) und dem ersten (11) und dem zweiten (13) Datenprozessor verbunden ist, wobei die Speicherzugriffsvorrichtung auf eine Signalgebung vom ersten Datenprozessor (11) anspricht, um dem ersten Datenprozessor (11) Zugriff auf die Speichervorrichtung zu ermöglichen, während sie gleichzeitig verhindert, dass der zweite Datenprozessor (13) auf die Speichervorrichtung (17) zugreift, und wobei die Speicherzugriffsvorrichtung auf eine Signalgebung vom zweiten Datenprozessor (13) anspricht, um dem zweiten Datenprozessor (13) Zugriff auf die Speichervorrichtung (17) zu ermöglichen, während sie gleichzeitig verhindert, dass der erste Datenprozessor (11) auf die Speichervorrichtung (17) zugreift.

23. System nach Anspruch 22, bei dem die Speicherzugriffsvorrichtung einen Datenumschalter aufweist.

24. System nach Anspruch 22, das auf einem Einzelchip als integrierte Schaltung vorgesehen ist.

25. System nach Anspruch 24, das eine Mensch-Maschine-Schnittstelle (19) aufweist, die mit dem ersten Datenprozessor (11) verbunden ist, um eine Kommunikation zwischen dem ersten Datenprozessor (11) und einem Benutzer zu ermöglichen.

26. System nach Anspruch 13, das auf einem Einzelchip als integrierte Schaltung vorgesehen ist.

27. System nach Anspruch 13, das eine Mensch-Maschine-Schnittstelle (19) aufweist, die mit dem ersten Datenprozessor (11) verbunden ist, um eine Kommunikation zwischen dem ersten Datenprozessor (11) und einem Benutzer zu ermöglichen.

28. System nach Anspruch 13, bei dem der erste Datenprozessor ein Mikroprozessor und der zweite Datenprozessor ein Digitalsignalprozessor ist.

29. Datenverarbeitungsvorrichtung mit:
einem Gerätetreiber (12) zur Durchführung einer gewünschten Kommunikation zwischen einem Task (20), der auf der Datenverarbeitungsvorrichtung (11) läuft, und einem weiteren Task (22), der auf einer weiteren Datenverarbeitungsvorrichtung (13) läuft,
einem Kommunikationsanschluss, der mit dem Gerätetreiber (12) verbunden ist, um dem Gerätetreiber (12) den Zugang zu einem Kommunikationskanal (15) zu ermöglichen, auf dem die gewünschte Kommunikation erfolgen kann,
**dadurch gekennzeichnet, dass**
der Kommunikationsanschluss (15) ferner dem Gerätetreiber (12) ermöglicht, Informationen zu empfangen, die angeben, ob der weitere Task (22) bezüglich der Kommunikation auf dem Kommunikationskanal (15) blockiert ist, und
der Gerätetreiber (12) eine Logik aufweist, die auf eine Blockiert-Angabe anspricht, um ein Unterbrechungssignal an die weitere Datenverarbeitungsvorrichtung (13) auszugeben, um die weitere Datenverarbeitungsvorrichtung (13) über die gewünschte Kommunikation zu informieren, wobei die Logik auf eine Angabe anspricht, dass der weitere Task (22) nicht blockiert ist, damit dem Gerätetreiber (12) ermöglicht wird, an der gewünschten Kommunikation auf dem Kommunikationskanal (15) teilzunehmen, ohne das Unterbrechungssignal an die weitere Datenverarbeitungsvorrichtung (13) auszugeben.

30. Vorrichtung nach Anspruch 29, die einen Scheduler zum wahlweisen Blockieren und Entblockieren des erstgenannten Tasks (20) bezüglich der Kommunikation auf dem Kommunikationskanal (15) aufweist, wobei der Gerätetreiber (12) mit dem Scheduler verbunden ist und nach Ausführung der gewünschten Kommunikation so betrieben werden kann, dass er den Scheduler so ansteuert, dass er den erstgenannten Task (20) bezüglich der Kommunikation auf dem Kommunikationskanal (15) blockiert.

31. Vorrichtung nach Anspruch 29, bei der der Kommunikationsanschluss ferner von der weiteren Datenverarbeitungsvorrichtung (13) ein Unterbrechungssignal empfängt, wobei der Gerätetreiber (12) auf das Unterbrechungssignal anspricht, um den Scheduler so anzusteuern, dass er den erstgenannten Task (20) bezüglich der Kommunikation auf dem Kommunikationskanal (15) entblockiert.

## Revendications

1. Procédé de mise en oeuvre d'une communication entre des processeurs de données, comprenant :
une première tâche s'exécutant sur un premier processeur de données (11), déterminant qu'une communication est désirée entre la première tâche (20) et une deuxième tâche (22) s'exécutant sur un deuxième processeur de données (13) ;
**caractérisé par le fait que** :
le premier processeur de données (11) détermine si la deuxième tâche (22) est bloquée en ce qui concerne une communication sur un canal de communication prédéterminé (15) ;
si la deuxième tâche (22) est bloquée en ce qui concerne une communication sur le canal de communication prédéterminé (15), le premier processeur de données (11) interrompt le deuxième processeur de données (13) de manière à informer le deuxième processeur de données (13) de la communication désirée et participe ensuite à la communication désirée sur le canal de communication prédéterminé (15) ; et
si la deuxième tâche (22) n'est pas bloquée en ce qui concerne une communication sur le canal de communication prédéterminé (15), le premier processeur de données (11) participe à la communication désirée sur le canal de communication prédéterminé (15) sans interrompre le deuxième processeur de données (13).

2. Procédé selon la revendication 1, comprenant en outre le fait que ;
si la deuxième tâche (22) est bloquée en ce qui concerne une communication sur le canal de communication prédéterminé (15), le premier processeur de données (11) fournit dans une mémoire (17) partagée par les premier (11) et deuxième (13) processeurs de données une indication selon laquelle le deuxième processeur de données (13) n'est pas bloqué en ce qui concerne une communication sur le canal de communication prédéterminé (15).

3. Procédé selon la revendication 1 ou la revendication 2, dans lequel ladite étape de détermination comprend le fait que le premier processeur de données (11) accède à une mémoire (17) qui est partagée par les premier (11) et deuxième (13) processeurs de données.

4. Procédé selon la revendication 3, dans lequel ladite étape de détermination comprend le fait que le premier processeur de données (11) obtient un accès exclusif à la mémoire partagée (17).

5. Procédé selon la revendication 4, dans lequel ladite étape de détermination comprend le fait que le premier processeur de données (11) recherche dans la mémoire partagée (17) des informations indicatives permettant de savoir si la deuxième tâche (22) est bloquée en ce qui concerne une communication sur le canal de communication prédéterminé (15).

6. Procédé selon l'une quelconque des revendications précédentes, dans lequel ladite étape de participation comprend le fait que la première tâche (20) échange des attributs de tampon de données avec la deuxième tâche (22).

7. Procédé selon la revendication 6, dans lequel ladite étape de participation comprend le fait que la première tâche (20) permute des données de tampon et des attributs de tampon avec la deuxième tâche (22).

8. Procédé selon la revendication 6, dans lequel ladite étape de participation comprend le fait que la première tâche (20) copie à partir des tampons de données des données fournies par la deuxième tâche (22), et la première tâche (20) copie les attributs associés auxdits tampons de données.

9. Procédé selon l'une quelconque des revendications précédentes, comprenant en outre le fait que :
après ladite étape de participation, le premier processeur de données (11) bloque la première tâche (20) en ce qui concerne une communication sur ledit canal de communication prédéterminé (15) et fournit dans une mémoire (17) partagée par les premier (11) et deuxième (13) processeurs de données, une indication selon laquelle la première tâche (20) est bloquée en ce qui concerne une communication sur le canal de communication prédéterminé (15).

10. Procédé selon la revendication 9, comprenant en outre le fait que :
le deuxième processeur de données (13) interrompt le premier processeur de données (11) de manière à indiquer qu'une communication est désirée entre la deuxième tâche (22) et la première tâche (20), et le premier processeur de données (11) débloque la première tâche (20) pour une communication sur le canal de communication prédéterminé (15) en réponse à ladite étape d'interruption.

11. Procédé selon la revendication 10, comprenant en outre le fait que :
le deuxième processeur de données (13), en même temps que ladite étape d'interruption, fournit dans une mémoire (17) partagée par les premier (11) et deuxième (13) processeurs de données, une indication selon laquelle le premier processeur de données (11) n'est pas bloqué en ce qui concerne une communication sur le canal de communication prédéterminé (15).

12. Procédé selon l'une quelconque des revendications 2 à 11, comprenant en outre le fait que ;
le deuxième processeur de données (13) débloque la deuxième tâche (22) en ce qui concerne une communication sur le canal de communication prédéterminé (15) en réponse à ladite étape d'interruption.

13. Système de traitement de données, comprenant :
un deuxième processeur de données (13) couplé à un premier processeur de données (11) de manière à permettre une communication entre eux ;
ledit premier processeur de données (11) comprenant un dispositif de commande de dispositif (12) destiné à mettre en oeuvre une communication désirée entre une première tâche (20) s'exécutant sur ledit premier processeur de données (11) et une deuxième tâche (22) s'exécutant sur ledit deuxième processeur de données (13) ;
un port de communication couplé audit pilote de dispositif de manière à permettre audit pilote de dispositif (12) d'accéder à un canal de communication (15) pour la communication désirée ;
**caractérisé par le fait que** :
ledit port de communication permet en outre audit pilote de dispositif (12) de recevoir des informations indiquant si la deuxième tâche (22) est bloquée en ce qui concerne une communication sur ledit canal de communication (15) ; et
ledit pilote de dispositif (12) comprend une logique sensible à une indication bloquée de manière à délivrer en sortie audit deuxième processeur de données (13), par l'intermédiaire dudit port de communication, un signal d'interruption de manière à informer ledit deuxième processeur de données (13) de la communication désirée, ladite logique étant sensible à une indication selon laquelle la deuxième tâche (22) n'est pas bloquée de manière à permettre audit dispositif de commande de dispositif (12) de participer à la communication désirée sur ledit canal de communication (15) sans délivrer en sortie ledit signal d'interruption audit deuxième processeur de données (13).

14. Système selon la revendication 13, dans lequel ledit canal de communication (15) comprend un appareil de mémoire (17) partagée par lesdits premier (11) et deuxième (13) processeurs de données.

15. Système selon la revendication 14, dans lequel ledit appareil de mémoire partagée (17) inclut lesdites informations indiquant si ladite deuxième tâche (22) est bloquée, ledit port de communication dudit premier processeur de données (11) étant couplé audit appareil de mémoire partagée (17) pour permettre audit pilote de dispositif (12) dudit premier processeur de données (11) d'accéder auxdites informations indiquant si ladite deuxième tâche (22) est bloquée.

16. Système selon la revendication 15, comprenant un appareil d'accès mémoire couplé entre ledit appareil de mémoire partagée et lesdits premier (11) et deuxième (13) processeurs de données, ledit appareil d'accès mémoire étant sensible à une signalisation en provenance dudit premier processeur de données (11) pour permettre audit pilote de dispositif (12) dudit premier processeur de données (11) d'accéder à ladite mémoire partagée (17) tout en interdisant audit deuxième processeur de données (13) d'accéder à ladite mémoire partagée (17).

17. Système selon la revendication 13, dans lequel ledit premier processeur de données (11) inclut un séquenceur destiné à bloquer et à débloquer de manière sélective ladite première tâche (20) en ce qui concerne une communication sur ledit canal de communication (15), ledit pilote de dispositif (12) étant couplé audit séquenceur et étant fonctionnel après l'exécution de la communication désirée afin de signaler audit séquenceur de bloquer ladite première tâche (20) en ce qui concerne une communication sur ledit canal de communication (15), et dans lequel ledit canal de communication (15) inclut un appareil de mémoire (17) partagée par lesdits premier (11) et deuxième (13) processeurs de données, ledit pilote de dispositif (12) étant en outre fonctionnel après l'exécution de la communication désirée afin de stocker dans ledit appareil de mémoire partagée (17) une indication selon laquelle ladite première tâche (20) est bloquée en ce qui concerne une communication sur ledit canal de communication (15).

18. Système selon la revendication 17, dans lequel ledit port de communication dudit premier processeur de données (11) est couplé audit deuxième processeur de données (13) qui reçoit un signal d'interruption en provenance dudit premier processeur de données, ledit pilote de dispositif (12) dudit premier processeur de données (11) étant sensible audit signal d'interruption afin de signaler audit séquenceur de débloquer ladite première tâche (20).

19. Système selon la revendication 13, comprenant un appareil de mémoire (17) couplé auxdits premier (11) et deuxième (13) processeurs de données, ledit pilote de dispositif (12) dudit premier processeur de données (11) étant sensible à ladite indication bloquée pour fournir à l'intérieur dudit appareil de mémoire (17) une indication selon laquelle ladite deuxième tâche (22) n'est pas bloquée en ce qui concerne une communication sur ledit canal de communication (15).

20. Système selon la revendication 19, dans laquelle ledit deuxième processeur de données (13) est couplé audit port de communication dudit premier processeur de données (11) de manière à fournir un signal d'interruption audit pilote de dispositif (12), ledit deuxième processeur de données (13) étant fonctionnel afin de fournir en même temps ledit signal d'interruption audit pilote de dispositif (12) de manière à fournir également dans ledit appareil de mémoire (17) une indication selon laquelle ladite première tâche (20) n'est pas bloquée en ce qui concerne une communication sur ledit canal de communication (15).

21. Système selon la revendication 20, dans lequel ledit premier processeur de données (11) inclut un séquenceur destiné à bloquer et à débloquer de manière sélective ladite première tâche (20) en ce qui concerne une communication sur ledit canal de communication (15), ledit dispositif de commande de dispositif (12) étant couplé audit séquenceur et sensible audit signal d'interruption afin de signaler audit séquenceur de débloquer ladite première tâche (20) en ce qui concerne une communication sur ledit canal de communication (15).

22. Système selon la revendication 21, comprenant un appareil d'accès mémoire couplé entre ledit appareil de mémoire (17) et lesdits premier (11) et deuxième (13) processeurs de données, ledit appareil d'accès mémoire étant sensible à une signalisation en provenance dudit premier processeur de données (11) de manière à permettre audit premier processeur de données (11) d'accéder audit appareil de mémoire tout en empêchant simultanément ledit deuxième processeur de données (13) d'accéder audit appareil de mémoire (17), et ledit appareil d'accès mémoire étant sensible à une signalisation en provenance dudit deuxième processeur de données (13) de manière à permettre audit deuxième processeur de données (13) d'accéder audit appareil de mémoire (17) tout en empêchant simultanément ledit premier processeur de données (11) d'accéder audit appareil de mémoire (17).

23. Système selon la revendication 22, dans lequel ledit appareil d'accès mémoire inclut un commutateur de données.

24. Système selon la revendication 22, prévu sur une seule puce de circuit intégré.

25. Système selon la revendication 24, comprenant une interface homme - machine (19) couplée audit premier processeur de données (11) pour permettre une communication entre ledit premier processeur de données (11) et un utilisateur.

26. Système selon la revendication 13, prévu sur une seule puce de circuit intégré.

27. Système selon la revendication 13, comprenant une interface homme - machine (19) couplée audit premier processeur de données (11) pour permettre une communication entre ledit premier processeur de données (11) et un utilisateur.

28. Système selon la revendication 13, dans lequel ledit premier processeur de données est un microprocesseur et ledit deuxième processeur de données est un processeur de signaux numériques.

29. Appareil de traitement de données, comprenant :
un pilote de dispositif (12) destiné à mettre en oeuvre une communication désirée entre une tâche (20) qui s'exécute sur l'appareil de traitement de données (11) et une autre tâche (22) qui s'exécute sur un autre appareil de traitement de données (13) ;
un port de communication couplé audit pilote de dispositif (12) pour permettre audit pilote de dispositif (12) d'accéder à un canal de communication (15) sur lequel la communication désirée peut se produire ;
**caractérisé par le fait que** :
ledit port de communication (15) permet en outre audit pilote de dispositif (12) de recevoir des informations indiquant si l'autre tâche (22) est bloquée en ce qui concerne une communication sur ledit canal de communication (15) ; et
ledit pilote de dispositif (12) comprend une logique sensible à une indication bloquée de manière à délivrer en sortie audit autre appareil de traitement de données (13) un signal d'interruption pour informer ledit autre appareil de traitement de données (13) de la communication désirée, ladite logique étant sensible à une indication selon laquelle l'autre tâche (22) n'est pas bloquée pour permettre audit pilote de dispositif (12) de participer à la communication désirée sur ledit canal de communication (15) sans délivrer en sortie ledit signal d'interruption audit autre appareil de traitement de données (13).

30. Appareil selon la revendication 29, incluant un séquenceur destiné à bloquer et à débloquer de manière sélective ladite première tâche mentionnée (20) en ce qui concerne une communication sur ledit canal de communication (15), ledit pilote de dispositif (12) étant couplé audit séquenceur et étant opérationnel après l'exécution de la communication désirée afin de signaler audit séquenceur de bloquer ladite première tâche mentionnée (20) en ce qui concerne une communication sur ledit canal de communication (15).

31. Appareil selon la revendication 29, dans lequel ledit port de communication sert en outre à recevoir un signal d'interruption en provenance de l'autre appareil de traitement de données (13), ledit pilote de dispositif (12) étant sensible audit signal d'interruption de manière à signaler audit séquenceur de débloquer ladite première tâche mentionnée (20) en ce qui concerne une communication sur ledit canal de communication (15).
